Europäisches Patentamt

European Patent Office

Office européen des brevets

(11) Numéro de publication : **0 412 884 B1**

(19)

(12) # FASCICULE DE BREVET EUROPEEN

(45) Date de publication du fascicule du brevet :
**09.11.94 Bulletin 94/45**

(51) Int. Cl.⁵ : **G01S 13/02, G06K 7/10**

(21) Numéro de dépôt : **90402228.2**

(22) Date de dépôt : **03.08.90**

(54) **Système radio de transmission de données à extrémité passive de faible coût.**

(30) Priorité : **08.08.89 FR 8910660**

(43) Date de publication de la demande :
**13.02.91 Bulletin 91/07**

(45) Mention de la délivrance du brevet :
**09.11.94 Bulletin 94/45**

(84) Etats contractants désignés :
**BE CH DE GB IT LI SE**

(56) Documents cités :
**EP-A- 0 198 642
EP-A- 0 247 612
EP-A- 0 254 954
EP-A- 0 308 964
FR-A- 2 527 870
FR-A- 2 624 677
US-A- 4 075 632
US-A- 4 196 418**

(73) Titulaire : **FRANCE TELECOM
6, Place d'Alleray
F-75015 Paris (FR)**

(72) Inventeur : **Guena, Jean
3 Cité Morgane
F-22560 Trebeurden (FR)**
Inventeur : **Leost, Jean-Claude
13 rue Jean Bart
F-22700 Perros Guirec (FR)**
Inventeur : **Meyer, Sylvain
Kernech'
Bulat Pestivien
F-22160 Callac de Bretagne (FR)**

(74) Mandataire : **Cabinet Martinet & Lapoux
BP 405
F-78055 Saint Quentin en Yvelines Cédex (FR)**

## Description

La présente invention concerne de manière générale les communications radio de proximité. Plus particulièrement, l'invention concerne un système radio de transmission de données par micro-ondes entre une station centrale et une extrémité passive ne comprenant pas de source hyperfréquence propre et fonctionnant en mode réponse.

Un tel système radio est utilisable pour échanger des informations à courte distance entre un point privilégié, dit station centrale, et une ou plusieurs extrémités passives, dites stations terminales, qui doivent rester très simples de conception pour satisfaire à des contraintes de coût et d'encombrement. Ce type de système radio a de nombreuses applications, par exemple dans :

- des systèmes de collecte à distance de données tels qu'un système de relevé de compteurs domestiques à interrogateur radio mobile,
- des systèmes de gestion d'accès ou de pointage avec interrogation à distance de numéros de code mémorisés dans des cartes individuelles d'accès ou de pointage,
- des systèmes de signalisation routière ou ferroviaire,
- des systèmes de tri automatique par exemple de colis postaux,
- des systèmes de facturation automatique à paiement par carte à puce sans contact.

Plusieurs systèmes radio à une extrémité passive sont connus dans l'état actuel de la technique.

La FR-A-2 527 870 divulgue une carte répondeur codée selon laquelle il est fait appel à une modulation d'amplitude pour transmettre des données selon le sens de transmission de la station terminale passive vers la station centrale. Une micro-onde incidente émise par la station centrale est reçue par la station terminale passive dans laquelle des données à transmettre modulent en amplitude la micro-onde incidente reçue ou l'une de ses harmoniques avant de la réémettre vers la station centrale. La station terminale passive s'alimente à partir de la micro-onde incidente. Un circuit de redressement et de filtrage est généralement prévu pour produire une tension continue d'alimentation à partir de la micro-onde incidente reçue.

La micro-onde modulée réémise par la station terminale vers la station centrale est de faible puissance du fait du faible rendement énergétique à la réception de la micro-onde incidente et de l'énergie prélevée pour alimenter l'extrémité passive et consécutivement un tel système radio a nécessairement une portée limitée. De plus, la modulation d'amplitude présente une faible immunité au bruit comparativement à une modulation de fréquence ou de phase ce qui ne favorise pas la portée d'un tel système.

La FR-A-2 624 677 décrit un système de liaison hertzienne bidirectionnelle à l'alternat dans lequel les liaisons établies entre des première et seconde stations émettrices-réceptrices sont de type à modulation d'amplitude. Dans la seconde station sont prévus des moyens réflecteurs pour réfléchir une onde incidente émise par la première station et des moyens de modulation pour moduler en amplitude cette onde incidente réfléchie en une onde modulée transmise vers la station centrale. Ce système de liaison hertzienne comporte deux dispositifs distincts pour respectivement réfléchir une onde incidente et pour moduler cette onde incidente réfléchie. L'invention propose de mettre à profit les caractéristiques intrinsèques de réflexion et modulation de phase d'une ligne en court-circuit et en circuit ouvert pour la réalisation d'un système radio dont une station est passive.

Une solution pour améliorer la portée d'un système radio à une station terminale passive est par exemple de remplacer la modulation d'amplitude de la micro-onde réémise par une modulation à deux états de phase ayant une meilleure immunité au bruit.

La EP-A-0343034 revendiquant la priorité française FR-A-2631725 du 20 mai 1988 et publiée le 23 novembre 1989 et donc opposable au titre de l'article 53(3et4) de la CBE, décrit un système radio dans lequel la micro-onde réémise par la station terminale est modulée à deux états de phase. Ce système radio autorise des communications de bonne qualité. Néanmoins son prix de revient est relativement élevé essentiellement du fait de la nécessité d'un commutateur micro-onde dans la station terminale. Il apparaît souhaitable de pouvoir disposer d'un système radio avec une station terminale passive de moindre coût, fonctionnant en modulation de phase pour la micro-onde réémise, quoique au prix d'une baisse des performances par rapport au système radio selon la demande de brevet mentionnée ci-dessus.

La présente invention vise à fournir un tel système radio de performances intermédiaires dans lequel le commutateur micro-onde dans l'extrémité passive est remplacé par un circuit très simple qui est utilisé pour la modulation de phase de l'onde réemise et également pour la détection d'amplitude de la micro-onde incidente.

A cette fin, le système radio selon l'invention est tel que défini dans la revendication 1.

Selon une réalisation préférée, la station centrale du système radio selon l'invention comprend une antenne plane d'émission, une une antenne plane de réception et des moyens de démodulation de phase qui sont définis dans les revendications 3 à 5.

L'invention sera mieux comprise à la lecture de la description suivante de plusieurs réalisations préférées du système radio selon l'invention en référence aux dessins annexés correspondants dans lesquels :

- la Fig. 1 est un bloc-diagramme du système radio de transmission de données à une extrémité passive selon l'invention ;

- la Fig. 2 montre une réalisation en technologie micro-ruban d'une antenne et de mélangeurs micro-ondes inclus dans la station centrale du système radio ;
- la Fig. 3 est un schéma de principe d'un circuit de détection d'amplitude et modulation de phase inclus dans la station terminale du système radio ;
- la Fig. 4 montre la structure générale d'une carte à puce sans contact équipée d'une station terminale d'un système radio selon l'invention ;
- la Fig. 5 est un bloc-diagramme d'un détecteur de phase inclus dans la station centrale ; et
- la Fig. 6 montre un diagramme logique relatif au fonctionnement d'un circuit logique de commande inclus dans le détecteur de phase de la Fig. 5 pour récupérer un signal de données transmis par la station terminale à partir d'une sélection dynamique d'un signal de démodulation parmi deux signaux de démodulation disponibles.

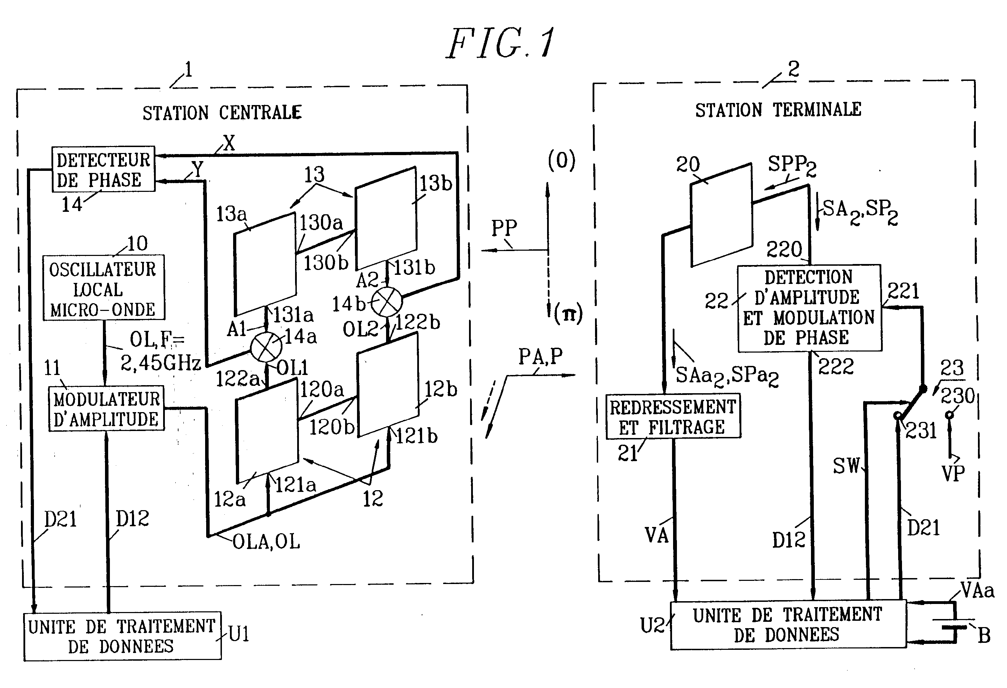

En référence à la Fig. 1, le système radio de transmission de données selon l'invention permet de transmettre alternativement des signaux numériques de données de type série D12 et D21 entre deux unités distantes de traitement de données U1 et U2. Les unités U1 et U2 sont respectivement connectées à une station centrale 1 et à une station terminale 2 du système. Chacune des stations centrale et terminale 1 et 2 inclut un équipement radio de transmission de données associés à l'unité respective U1, U2. L'unité U1 et la station centrale 1 sont par exemple inclus dans un publiphone à carte de paiement sans contact. L'unité U2 et la station terminale 2 sont dans ce cas incluses dans une carte de paiement sans contact du type carte à puce électronique.

La transmission des signaux de données D12 et D21 alternativement de la station centrale 1 vers la station terminale 2 et inversement fait appel respectivement à une modulation d'amplitude et à une modulation à deux états de phase 0 et $\pi$ qui utilise une même micro-onde porteuse P de fréquence F émise par la station centrale 1. Des périodes de transmission de données de l'unité U1 vers l'unité U2 et inversement sont alternativement attribuées aux unités de traitement de données U1 et U2. Pendant les périodes de transmission de données qui leur sont attribuées, les unités U1 et U2 transmettent respectivement les signaux de données D12 et D21. Des caractères réservés XON et XOFF portés par les signaux de données D12 et D21 sont échangés entre les unités U1 et U2 afin de s'informer des début et fin d'une période de transmission de données.

Pendant les périodes de transmission de données de l'unité U1 vers l'unité U2, la station centrale 1 émet une micro-onde PA de fréquence F qui est modulée en amplitude par le signal de données D12. Pendant les périodes de transmission de données de l'unité U2 vers l'unité U1, la station centrale 1 émet la micro-onde non modulée P. La micro-onde P est détectée par une antenne de la station terminale 2 et est modulée à deux états de phase 0 et $\pi$ par le signal de données D21 pour produire une micro-onde modulée en phase PP de fréquence F réémise vers la station centrale 1 selon la même polarisation que les micro-ondes PA et P. Les micro-ondes modulées PA et PP sont démodulées respectivement dans les stations terminale 2 et centrale 1 afin de récupérer les signaux de données D12 et D21.

La station centrale 1 comprend un oscillateur local micro-onde 10, un modulateur d'amplitude 11, une antenne micro-onde d'émission 12, une antenne micro-onde de réception 13, et des moyens de démodulation synchrone de phase constitués par deux mélangeurs 14a et 14b et un détecteur de phase 14.

L'oscillateur local 10 produit un signal micro-onde OL de fréquence F par exemple égale à 2,45 GHz. Le signal OL est appliqué à une première entrée du modulateur d'amplitude 11. Une seconde entrée du modulateur 11 reçoit le signal de données D12 transmis par l'unité U1.

Pendant les périodes de transmission de données de l'unité U1 vers l'unité U2, le signal D12 est actif et le modulateur 11 fournit un signal micro-onde modulé OLA correspondant au signal micro-onde OL dont l'amplitude a été modulée par le signal D12. Le signal micro-onde modulé OLA est appliqué à des accès de même polarisation de l'antenne 12 qui émet en réponse la micro-onde correspondante PA.

Pendant les périodes de transmission de données de l'unité U2 vers l'unité U1, le signal D12 est inactif et le modulateur 11 fournit en sortie le signal micro-onde OL. Le signal OL est appliqué aux mêmes accès de l'antenne 12 qui émet en réponse la micro-onde correspondante P.

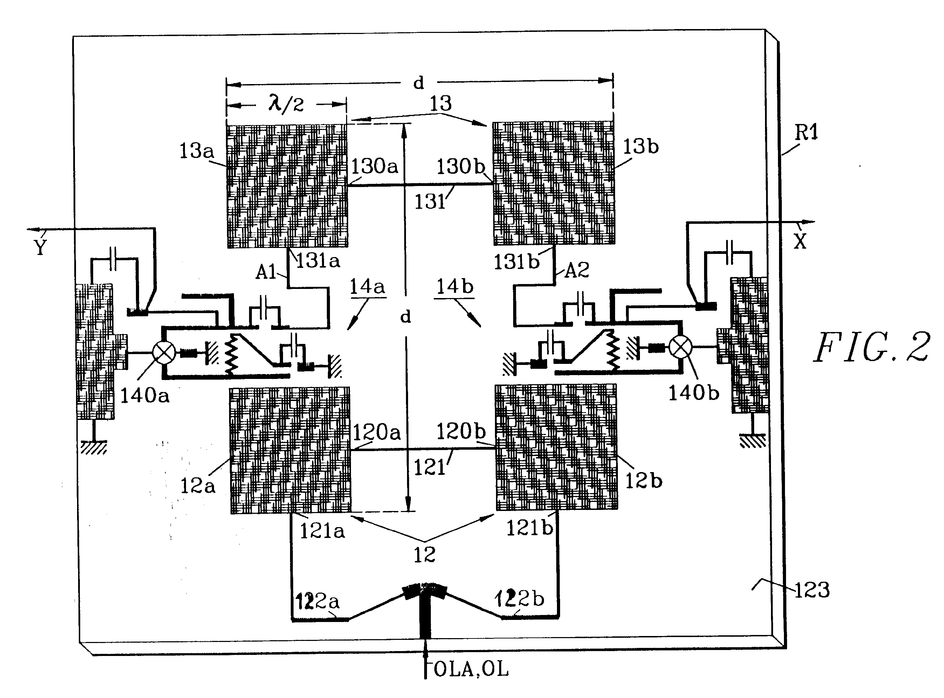

L'antenne micro-onde d'émission 12 est une antenne plane à deux motifs imprimés de forme carrée 12a et 12b. L'antenne micro-onde de réception 13 est de même que l'antenne 12 une antenne plane à deux motifs imprimés de forme carrée 13a et 13b. En référence également à la Fig. 2, les antennes 12 et 13 sont supportées par une même plaque de circuit imprimé double face 123. Sur une face avant, outre les motifs d'antenne 12a, 12b et 13a, 13b, la plaque 123 supporte également les mélangeurs 14a et 14b. Une face arrière conductrice de la plaque 123 est reliée à une masse de référence et forme un écran réflecteur R1. Chaque motif d'antenne 12a, 12b et 13a, 13b est un carré ayant des côtés de dimension égale à $\lambda/2$, ou $\lambda$ est la longueur d'onde correspondant à la fréquence F du signal micro-onde OL. Afin de constituer les antennes planes micro-onde 12 et 13, les quatre motifs 12a, 12b et 13a, 13b sont disposés respectivement aux quatre coins d'un carré de surface dxd de façon à ce que les côtés des motifs d'antenne soient parallèles et perpendiculaires aux côtés du carré de surface dxd, où d est une dimension caractéristique et déterminée de manière connue afin d'obtenir les diagrammes de rayonnement désirés.

Comme montré à la Fig. 2, deux premiers accès 120a et 120b de même polarisation des motifs 12a et 12b sont reliés par un microruban 121, les signaux micro-ondes OLA et OL sont fournis à des seconds accès 121a et 121b des motifs 12a et 12b, de polarisation croisée par rapport aux accès 120a et 120b, à travers des micro-rubans 122a et 122b ayant des structures symétriques. Les signaux micro-ondes appliqués aux accès 121a et 121b et correspondant au signal OLA ou OL sont en phase et l'antenne 12 émet la micro-onde correspondante PA ou P à destination de la station terminale 2.

En référence à la Fig. 1, la station terminale 2 comprend une antenne 20, un circuit de redressement et filtrage 21, un circuit de détection d'amplitude et de modulation de phase 22 et un commutateur basse fréquence 23.

L'antenne 20 est composée d'un unique motif imprimé carré identique aux motifs imprimés 12a, 12b et 13a, 13d des antennes 12 et 13 de la station centrale 1.

Pendant les périodes de transmission de données de l'unité U1 vers l'unité U2, l'antenne 20 reçoit la micro-onde PA dont l'amplitude est modulée par le signal D12 et délivre en réponse des signaux micro-ondes correspondants qui sont déphasés de $\pi$ entre eux $SA_2$ et $SAa_2$ respectivement par deux accès différents. Les signaux $SA_2$ et $SAa_2$ sont appliqués respectivement à une entrée 220 du circuit 22 et à une entrée du circuit 21. Pendant les périodes de transmission de données de l'unité U2 vers l'unité U1, l'antenne 20 reçoit la micro-onde P et délivre en réponse par les mêmes accès des signaux micro-ondes correspondants déphasés de $\pi$ entre eux $SP_2$ et $SPa_2$. Les signaux $SP_2$ et $SPa_2$ sont de même que les signaux $SA_2$ et $SAa_2$ appliqués respectivement à l'entrée 220 du circuit 22 et à l'entrée du circuit 21.

Le circuit de redressement et filtrage 21 est un circuit classique par exemple incluant une diode de redressement et une capacité de filtrage. Le circuit 21 produit une tension continue d'alimentation VA par redressement et filtrage. La tension VA est fournie à l'unité U2 pour alimenter la totalité ou une partie des circuits de l'unité U2. Une pile électrique miniature B est prévue si nécessaire pour fournir à l'unité U2 une tension continue d'alimentation supplémentaire VAa.

Pendant les périodes de transmission de l'unité U1 vers l'unité U2, le commutateur 23 commandé par un signal SW délivré par l'unité U2, est dans une position 230 et une tension continue VP est appliquée à une entrée 221 du circuit de détection d'amplitude et modulation de phase 22. La tension VP appliquée à l'entrée 221 du circuit 22 impose à celui-ci qu'il fonctionne en détection d'amplitude pour fournir le signal D12 par une sortie 222. Le signal de données D12 fourni par le détecteur 22 est appliqué à l'unité de traitement de données U2.

Pendant les périodes de transmission de l'unité U2 vers l'unité U1, le commutateur 23 est dans une position 231, et le signal de données D21 est appliqué par l'unité U2 à l'entrée 221 du circuit de détection d'amplitude et modulation de phase 22. Le circuit 22 fonctionne alors en modulateur de phase, et un signal micro-onde $SPP_2$ dont la phase est modulée par le signal de données D21 est transmis vers l'antenne 20. La micro-onde PP correspondant au signal SPP2 est émise par l'antenne 20 vers la station centrale 1.

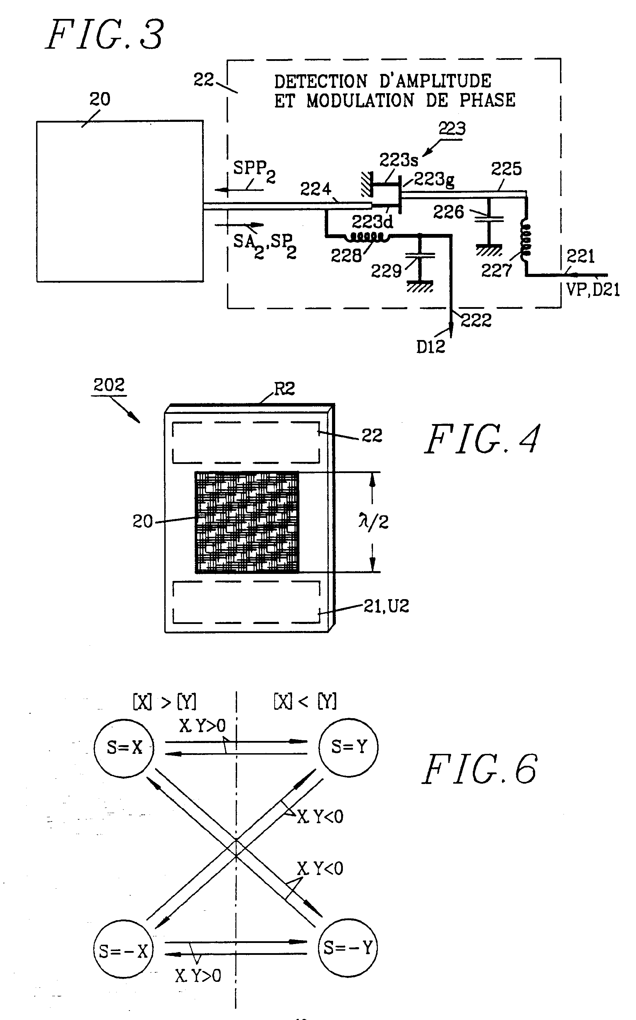

En référence à la Fig. 3, le circuit de détection d'amplitude et modulation de phase 22 est de conception extrêmement simple et comprend principalement un unique transistor 223 de type à effet de champ (TEC).

Un drain 223d du transistor 223 est relié à l'accès correspondant de l'antenne 20 à travers une première ligne de transmission 224 correspondant à la sortie 220 du circuit 22. Une source 223s du transistor 223 est reliée directement à la masse. Une grille 223g du transistor 223 est reliée à une extrémité d'une seconde ligne de transmission 225. Une autre extrémité de la ligne 225 est reliée à la masse à travers un condensateur 226 et à une première borne d'une bobine 227. Une seconde borne de la bobine 227 correspond à l'entrée 221 du circuit 22 et reçoit la tension continue VP et le signal de données D21 respectivement pendant les périodes de transmission de l'unité U1 vers l'unité U2 et de l'unité U2 vers l'unité U1. Une connexion intermédiaire est prévue dans la ligne de transmission 224 afin de connecter une première borne d'une bobine 228. Une seconde borne de la bobine 228 correspond à la sortie 222 du circuit 22. Un condensateur 229 relie la seconde borne de la bobine 228 à la masse.

Le fonctionnement du circuit de détection d'amplitude et modulation de phase 22 est maintenant décrit.

Le transistor 223 est passant dans une plage de tension de grille comprise entre VG=0 et VG=Vp, où VG est la tension de grille et Vp une tension de pincement négative. Pour une tension de grille VG=0, le transistor 223 est saturé et est équivalent entre drain et source, 223d et 223s, à une résistance de très faible valeur. Lorsque la tension de grille VG est inférieure à la tension de pincement Vp, le transistor 223 est bloqué et est équivalent entre drain et source à une résistance de très forte valeur. La tension continue VP est comprise dans la plage de tension de grille pour laquelle le transistor 223 fonctionne en régime quadratique et qui a une amplitude intermédiaire comprise entre VG=0 et VG=Vp, c'est-à-dire 0 > VP > Vp. Le signal de données D21 délivré par l'unité de traitement V2 a des niveaux de tension V1 et V2 tels que V1=0 et V2 < Vp. Les niveaux V1 et V2 correspondent à des états logiques "0" et "1" et commandent respectivement la saturation et le blocage du transistor 223.

Pendant les périodes de transmission de l'unité U1 vers l'unité U2, la tension VP est appliquée à la grille 223g du transistor 223. Le transistor 223 fonctionne alors en régime quadratique et un signal $(SA_2)^2$ est produit au niveau du drain 223d du transistor 223. Le signal $(SA_2)^2$ est représentatif du carré du signal $SA_2$ délivré par l'antenne 20. La bobine 228 et le condensateur 229 constituent un filtre passe-bas qui élimine des composantes de fréquence haute du signal $(SA_2)^2$ et transmet une composante de basse fréquence représentative du signal de données D12. La longueur de la ligne 224 est déterminée de manière à avoir une détection optimale à la fréquence F utilisée.

Pendant des périodes de transmission de données de l'unité U2 vers l'unité U1, l'antenne 20 délivre le signal micro-onde $SP_2$ qui est transmis au circuit 22, et le signal D21 est appliqué à la grille 223g du transistor 223. Lorsque le signal de données D21 est au niveau de tension V1=0, le transistor 223 est saturé et la ligne 224 est terminée par un quasi court-circuit. Au niveau de ce quasi court-circuit, le champ électrique réfléchi satisfait aux conditions aux limites et présente une phase en opposition par rapport au champ électrique incident. Le signal micro-onde $SPP_2$ transmis vers l'antenne 20 est produit par une réflexion en opposition de phase du signal micro-onde $SP_2$. Lorsque le signal de données D21 est au niveau de tension V2 < Vp, le transistor 223 est bloqué et la ligne 224 est terminée par un quasi circuit ouvert. Au niveau de ce quasi circuit ouvert, le champ électrique réfléchi est en phase avec le champ électrique incident. Le signal micro-onde $SPP_2$ transmis vers l'antenne 20 est en phase avec le signal micro-onde $SP_2$.

Il apparaît donc que le signal micro-onde $SP_2$ commandant l'émission de la micro-onde PP est modulé avec des phases, 0 et $\pi$ par le signal de données D21 et est produit par rétroréflexion du signal $SP_2$. Une légère adaptation par stub peut être éventuellement apportée sur la ligne 224 de manière à obtenir un écart de phase rigoureusement égal à $\pi$.

En référence à la Fig. 4, la station terminale 2 et l'unité de traitement de données U2 sont inclus dans une carte à puce sans contact 202 représentée approximativement à une échelle 3/4. Une face avant de la carte 202 supporte l'antenne 20 et les divers circuits dans la station 2 et l'unité U2. Les circuits de la station 2 et de l'unité U2 se présentent sous la forme de puces microélectroniques et d'éléments discrets ayant des pattes de connexion soudées à des microrubans de la carte 202. Les localisations des circuits 21 et 22 dans la station 2, et de l'unité U2 sur la carte 202 sont montrées en traits discontinus. Un écran réflecteur R2 est localisé sur une face arrière de la carte 202 et est relié à la masse de référence de la station terminale 2.

En référence à nouveau aux Figs. 1 et 2, l'antenne micro-onde de réception 13 reçoit la micro-onde modulée PP. Deux premiers accès 130a et 130b de même polarisation des motifs 13a et 13b sont reliés par une ligne microruban 131. Des signaux micro-ondes A1 et A2 correspondant à la micro-onde PP sont délivrés respectivement par des seconds accès 131a et 131b des motifs 13a et 13b.

Les mélangeurs 14a et 14b sont de type connu et ne seront pas décrits en détail. De manière classique dans les mélangeurs, en technologie micro-onde, des transistors à effet de champ (TEC), 140a et 140b, sont utilisés. Des premières entrées des mélangeurs 14a et 14b reçoivent respectivement les signaux micro-ondes A1 et A2 délivrés par l'antenne de réception 13. Des secondes entrées des mélangeurs 14a et 14b sont couplées à des accès 122a et 122b des motifs 12a et 12b de l'antenne d'émission 12 et reçoivent respectivement des signaux d'oscillateur local OL1 et OL2.

Les signaux A1, A2, OL1, OL2 sont exprimés par les égalités :

$$A1 = U \cos(\omega t + \Psi + \theta),$$
$$A2 = U \cos(\omega t + \Psi + \theta + \pi/2),$$
$$OL1 = V \cos(\omega t),$$

et

$$OL2 = V \cos(\omega t),$$

où U et V sont respectivement des amplitudes des signaux micro-ondes A1, A2 et des signaux d'oscillateur local OL1, OL2, où $\omega$ et $\Psi$ représentent respectivement la pulsation correspondant à la fréquence F du signal OL et un déphasage aléatoire introduit par la transmission radio entre les stations 1 et 2, et où $\theta=0$ ou $\pi$ représente l'état de phase fonction du signal de données D21 dans la micro-onde PP modulée à deux états de phase 0 et $\pi$.

Les mélangeurs 14a et 14b fournissent respectivement deux signaux de démodulation basse fréquence X et Y dérivés de produits de signaux A1.OL1 et A2.OL2 réalisés par les mélangeurs 14a et 14b. Les signaux X et Y sont exprimés par les égalités suivantes :

$$X = U.V \cos(\Psi + \theta),$$

et

$$Y = U.V \sin(\Psi + \theta).$$

Les égalités ci-dessus montrent que les signaux X et Y dépendent, selon des fonctions trigonométriques, de l'état de phase $\theta=0$ ou $\pi$ de la micro-onde PP et du déphasage aléatoire $\Psi$.

Les signaux amplifiés X et Y sont appliqués à des entrées du détecteur de phase 14.

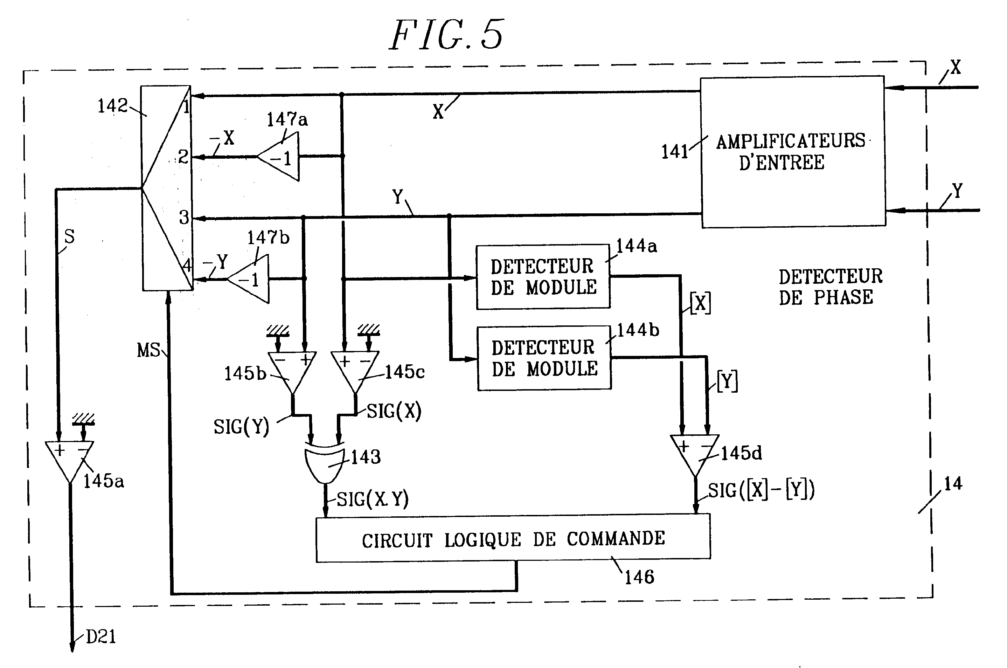

En référence à la Fig. 5, le détecteur de phase 14 comprend essentiellement des amplificateurs d'entrée 141, un multiplexeur analogique à quatre entrées 142, une porte OU exclusif à deux entrées 143, deux détecteurs de module 144a et 144b, quatre comparateurs 145a à 145d, et un circuit logique de commande 146.

Les signaux amplifiés X et Y sont fournis respectivement à des première et troisième entrées du multiplexeur 142. Des signaux -X et -Y qui sont établis à partir des signaux X et Y par des amplificateurs inverseurs 147a et 147b sont fournis à des seconde et quatrième entrées du multiplexeur 142 respectivement. Un signal S est sélecté parmi les signaux X, -X, Y et -Y par un mot de sélection MS qui est fourni par le circuit logique de commande 146 et appliqué à des entrées de sélection du multiplexeur 142. Le signal sélecté S est fourni à une entrée directe + du comparateur 145a dont une entrée inverse est reliée à la masse de référence. Le comparateur 145a constitue un détecteur de signe qui délivre un état logique "0" lorsque le signe du signal S est positif et un état logique "1" dans le cas contraire. Le comparateur 145a restitue en sortie le signal de données D21.

Les comparateurs 145b, 145c et la porte OU exclusif 143 ont pour fonction de produire un signal $SIG(X.Y)$ représentatif du signe ,c'est-à-dire de la polarité, du produit des signaux X.Y

Des entrées directes + des comparateurs 145b et 145c reçoivent respectivement les signaux Y et X. Des entrées inverses - des comparateurs 145b et 145c sont reliées à la masse de référence. Le comparateur 145b délivre un signal $SIG(Y)$ représentatif du signe du signal Y. Le comparateur 145c délivre un signal $SIG(X)$ représentatif du signe du signal X. Le signal $SIG(X)$ ou $SIG(Y)$ est à un état logique "0" lorsque le signe du signal correspondant X ou Y est positif et à un état logique "1" dans le cas contraire.

Les signaux $SIG(X)$ et $SIG(Y)$ sont appliqués respectivement à des première et seconde entrées de la porte 143. La porte 143 founrit un signal $SIG(X.Y)$ représentatif du signe du produit des signaux X.Y. Le signal $SIG(X.Y)$ est à un état logique "0" lorsque le signe du produit X.Y est positif, et à un état logique "1" dans le cas contraire où le signe du produit X.Y est négatif. Le signal $SIG(X.Y)$ est appliqué à une première entrée du circuit logique de commande 146.

Les détecteurs de module 144a et 144b reçoivent les signaux X et Y et délivrent les modules $|X|$ et $|Y|$ de ces signaux, respectivement. Les détecteurs 144a et 144b sont par exemple constitués par des circuits de redressement double alternances de précision. Les modules $|X|$ et $|Y|$ sont fournis respectivement à des entrées directe + et inverse - du comparateur 145d. Le comparateur 145d délivre un signal $SIG(|X|-|Y|)$ représentatif du signe de la différence de modules $|X|-|Y|$. Le signal $SIG(|X|-|Y|)$ est appliqué à une seconde entrée du circuit logique de commande 146.

Le circuit logique de commande 146 réalise une sélection dynamique du signal S parmi les signaux X, -X, Y et -Y afin de permettre une récupération correcte et optimale du signal de données D21. Cette sélection dynamique est effectuée indépendamment de variations aléatoires de déphasage dues à la transmission radio et susceptibles d'introduire des erreurs de décision sur le signal D21. A partir des signaux $SIG(|X|-|Y|)$ et $SIG(X.Y)$, le circuit 146 détecte celui des signaux X et Y qui a un module supérieur ainsi que des changements de signe des signaux X et Y dûs aux variations aléatoires de déphasage. Le module du signal sélecté $|S|$ est pris égal au plus grand des modules $|X|$ et $|Y|$. Le signe affecté au signal sélecté S dépend des changements de signe détectés des signaux X et Y à partir du signal $SIG(X.Y)$.

Le diagramme montré à la Fig. 6 précise le signal sélecté S=X, S=-X, S=Y ou S=-Y en fonction de conditions de module $|X|>Y$ et $|X|<|Y|$ et de conditions de signe X.Y>0 et X.Y<0 détectées à partir des signaux $SIG(|X|-|Y|)$ et $SIG(X.Y)$ respectivement.

Afin de montrer l'interprétation qu'il convient de faire de ce diagramme, il est supposé à titre d'exemple un état initial pendant la transmission où $|X|>Y$ est la condition de module détectée ; le signal S=X ou S=-X est alors sélecté. Dans le cas où la condition $|X|<|Y|$ est ensuite détectée, si le signal S=X est le signal sélecté à l'état initial alors la nouvelle condition $|X|<|Y|$ entraîne la sélection du signal S=Y dans le cas où la condition de signe X.Y>0 est également détectée, et entraîne la sélection du signal S=-Y dans le cas où c'est la condition X.Y<0 qui est détectée. Si le signal S=-X est le signal sélecté à l'état initial alors la nouvelle condition $|X|<|Y|$ entraîne la sélection du signal S=-Y dans le cas où la condition de signe X.Y>0 est également détectée et entraîne la sélection du signal S=Y dans le cas où c'est la condition X.Y<0 qui est détectée. L'homme du métier interprètera aisément ce diagramme pour un état initial pendant la transmission où $|X|<|Y|$ est la condition de module détectée.

## Revendications

1. Système radio pour transmettre alternativement par micro-ondes des premier et second signaux numériques de données (D12, D21) entre des première et seconde unités de traitement de données (U1, U2) connectées au système radio, ledit premier signal de données (D12) étant transmis par la première unité (U1) vers la seconde unité (U2) pendant des premières périodes de transmission de donnée ,et ledit second signal de données (D21) étant transmis par la seconde unité (U2) vers la première unité (U1) pendant des secondes périodes de transmission de données,

ledit système comprenant des stations centrale (1) et terminale (2) de transmission et réception,

ladite station centrale de transmission et réception (1) étant reliée à la première unité de traitement pour émettre une première micro-onde (PA) modulée en amplitude par ledit premier signal de données (D12) pendant lesdites premières périodes de transmission et une seconde micro-onde non modulée (P) pendant lesdites secondes périodes de transmission, et

ladite station terminale de transmission et réception (2) étant reliée à la seconde unité de traitement et comprenant une antenne d'émission et de réception (20) ayant des premier et second accès pour émettre une troisième micro-onde (PP) modulée à deux états de phase (O, π) par le second signal de données (D21) pendant les secondes périodes de transmission

et un circuit de détection et modulation de micro-onde (22) connecté au premier accès de l'antenne (20) par une ligne de transmission (224) pour d'une part, détecter l'amplitude de la première micro-onde (PA) émise par la station centrale (1) pendant lesdites premières périodes de transmission afin de récupérer le premier signal de données (D12) et, d'autre part, moduler la seconde micro-onde (P) reçue par l'antenne (20) pendant lesdites secondes périodes de transmission et rétroréfléchie vers ladite station centrale (1),

caractérisé en ce que le circuit de détection et modulation (22) comprend un transistor à effet de champ (223) ayant des première et seconde électrodes (223d et 223s) reliées respectivement à ladite extrémité de ladite ligne de transmission (224) et à une masse de référence de ladite station terminale (2), et une troisième électrode (223g) à laquelle sont appliqués, pendant les premières périodes de transmission de données, une tension continue prédéterminée (VP) commandant le fonctionnement du transistor (223) en régime quadratique et, pendant les secondes périodes de transmission de données, le second signal de données (D21) commandant le fonctionnement du transistor (223) en régime de commutation afin de moduler à deux états de phase ladite seconde micro-onde en la troisième micro-onde rétroréfléchie vers la station centrale (1), selon les niveaux logiques du second signal de données (D21).

2. Système radio conforme à la revendication 1, caractérisé en ce que la station terminale (2) comprend des moyens (21) reliés au second accès de l'antenne (20) pour produire une tension continue d'alimentation (VA) par redressement et filtrage des première et seconde micro-ondes (PA, P) reçues, ladite tension continue d'alimentation (VA) étant fournie à des circuits dans la station terminale (2) et/ou à la seconde unité de traitement de données (U2).

3. Système radio conforme à la revendication 1 ou 2, caractérisé en ce que la station centrale (1) comprend

une antenne plane d'émission (12) à deux éléments carrés (12a et 12b) et ayant deux premiers accès (121a, 121b) recevant des premiers et seconds signaux à micro-onde correspondant auxdites premières et secondes micro-ondes (PA,P) pour émettre la première micro-onde (PA) vers la station terminale (20) pendant les premières périodes de transmission de données, et pour émettre ladite seconde micro-onde (PP) et fournir le second signal à micro-onde (OL) pendant les secondes périodes de transmission de données,

une antenne plane de réception (13) à deux éléments carrés (13a et 13b) pour recevoir la troisième micro-onde (PP) émise par la station terminale (20) pendant les secondes périodes de transmission de données afin de délivrer deux signaux déphasés à micro-onde (A1, A2) correspondant à ladite troisième micro-onde,et

des moyens de démodulation de phase (14a, 14b et 14) reliés aux éléments carrés (12a, 12b, 13a, 13b) des antennes d'émission et de réception (12, 13) et recevant lesdits deux signaux micro-ondes déphasés (A1, A2) et ledit second signal à micro-onde (OL) pour démoduler en phase ledit second signal de données pendant lesdites secondes périodes de transmission.

4. Système radio conforme à la revendication 3, caractérisé en de que lesdits moyens de démodulation de phase comprennent

deux mélangeurs micro-ondes (14a et 14b) recevant les signaux micro-ondes déphasés (A1, A2) et le second signal à micro-onde (OL) pour produire respectivement deux premiers signaux de démodulation basse fréquence (X,Y) dépendant, selon des fonctions trigonométriques (sin, cos), de l'état de phase (θ=0, π) du second signal de données (D21) dans la troisième micro-onde (PP) et d'un déphasage aléatoire (Ψ) introduit par la transmission radio, et

des moyens pour récupérer (14) le second signal de données (D21) à partir des deux signaux de démodulation basse fréquence (X, Y).

5. Système radio conforme à la revendication 4, caractérisé en ce que lesdits moyens pour récupérer (14) comprennent

des inverseurs analogiques (147a, 147b) pour produire deux seconds signaux de démodulation basse fréquence (-X, -Y) en opposition de phase par rapport aux premiers signaux de démodulation basse fréquence (X, Y), et

des moyens logiques (146) pour sélecter dynamiquement l'un (S) des premiers et seconds signaux de démodulation basse fréquence (X, -X, Y, -Y) en fonction des modules ($|X|$, $|Y|$) et signes ($SIG|X.Y|$) desdits premiers signaux de démodulation (X, Y) afin de récupérer le second signal de données (D21).

6. Système radio conforme à l'une quelconque des revendications 1 à 5, caractérisé en ce que la station terminale (2) et la seconde unité de traitement de données (U2) sont intégrées dans une carte de paiement sans contact incluant une puce électronique.

**Patentansprüche**

1. Funksystem zur abwechselnden Mikrowellenübertragung erster und zweiter digitaler Datensignale (D12, D21) zwischen mit dem Funksystem verbundenen ersten und zweiten Datenverarbeitungseinheiten (U1, U2), wobei das erste Datensignal (D12) während erster Datenübertragungsperioden durch die erste Einheit (U1) zur zweiten Einheit (U2) übertragen wird und wobei das zweite Datensignal (D21) während zweiter Datenübertragungsperioden durch die zweite Einheit (U2) zur ersten Einheit (U1) übertragen wird,

- wobei das System Zentral(1)- und Datenendeinrichtungs(2)-Stationen zu Übertragung und Empfang umfaßt,
- wobei die zentrale Übertragungs- und Empfangsstation (1) mit der ersten Verarbeitungseinheit verbunden ist, um während der ersten Übertragungsperioden eine durch das erste Datensignal (D12) amplitudenmodulierte erste Mikrowelle (PA) und während der zweiten Übertragungsperioden eine nicht modulierte Mikrowelle (P) zu senden, und
- wobei die Übertragungs- und Empfangsdatenendeinrichtungsstation (2) mit der zweiten Verarbeitungseinheit verbunden ist und eine Sende- und Empfangsantenne (20) umfaßt, die erste und zweite Zugänge aufweist, um während der zweiten Übertragungsperioden eine durch das zweite Datensignal (D21) modulierte dritte Mikrowelle (PP) mit zwei Phasenzuständen $(0, \pi)$ zu senden, und
- einen Mikrowellenerfassungs- und Modulationskreis (22), der durch eine Übertragungsleitung (224) mit dem ersten Zugang der Antenne (20) verbunden ist, um einerseits die Amplitude der durch die Zentralstation (1) während der ersten Übertragungsperioden gesendete erste Mikrowelle (PA) zu erfassen, um das erste Datensignal (D12) wiederzugewinnen, und andererseits die durch die Antenne (20) während der zweiten Übertragungsperioden empfangene und zur Zentralstation (1) retroreflektierte zweite Mikrowelle (P) zu modulieren, dadurch **gekennzeichnet**, daß der Erfassungs- und Modulationskreis (22) einen Feldeffekttransistor (223) umfaßt, dessen erste und zweite Elektroden (223d und 223s) jeweils mit dem Ende der Übertragungsleitung (224) und einer Referenzmasse der Datenendeinrichtungsstation (2) verbunden sind und auf deren dritte Elektrode (223g) während der ersten Datenübertragungsperioden eine vorbestimmte Gleichspannung (VP), die die Funktion des Transistors (223) in quadratischer Betriebsart steuert, und während der zweiten Datenübertragungsperioden das zweite Datensignal (D21) gegeben wird, das die Funktion des Transistors (223) im Umschaltbetrieb steuert, um die zweite Mikrowelle mit zwei Phasenzuständen zu der zu der Zentralstation (1) reflektierten dritten Mikrowelle gemäß den Logikpegeln des zweiten Datensignals (D21) zu modulieren.

2. Funksystem nach Anspruch 1, dadurch **gekennzeichnet**, daß die Datenendeinrichtungsstation (2) mit den zweiten Zugängen der Antenne (20) verbundene Mittel (21) umfaßt, um eine Versorgungsgleichspannung (VA) durch Gleichrichtung und Filterung der empfangenen ersten und zweiten Mikrowellen (PA, P) zu erzeugen, wobei die Versorgungsgleichspannung (VA) zu Kreisen in der Datenendeinrichtungsstation (2) und/oder zur zweiten Datenverarbeitungseinheit (U2) geliefert wird.

3. Funksystem nach den Ansprüchen 1 oder 2, dadurch **gekennzeichnet**, daß die Zentralstation (1) umfaßt
- eine ebene Sendeantenne (12) mit zwei quadratischen Elementen (12a und 12b) und aufweisend zwei erste Zugänge (121a, 121b), die erste und zweite Mikrowellensignale entsprechend den ersten und zweiten Mikrowellensignale (PA, P) empfangen, um während der ersten Datenübertragungsperioden die erste Mikrowelle (PA) zur Datenendeinrichtungsstation (20) zu senden und um während der zweiten Datenübertragungsperioden die zweite Mikrowelle (PP) zu senden und das zweite Mikrowellensignal (OL) zu liefern,
- eine ebene Empfangsantenne (13) mit zwei quadratischen Elementen (13a und 13b) zum Empfangen der durch die Datenendeinrichtungsstation (20) gesendeten dritten Mikrowelle (PP) während der zweiten Datenübertragungsperioden, um zwei der dritten Mikrowelle entsprechende phasenverschobene Mikrowellensignale (A1, A2) auszugeben, und

- Phasendemodulationsmittel (14a, 14b und 14), die mit den quadratischen Elementen (12a, 12b, 13a, 13b) der Sende- und Empfangsantennen (12, 13) verbunden sind und die beiden phasenverschobenen Mikrowellensignale (A1, A2) und das zweite Mikrowellensignal (0L) empfangen, um das zweite Datensignal während der zweiten Übertragungsperioden in der Phase zu demodulieren.

4. Funksystem nach Anspruch 3, dadurch **gekennzeichnet**, daß die Phasendemodulationsmittel umfassen

- zwei Mikrowellenmischer (14a und 14b), die die phasenverschobenen Mikrowellensignale (A1, A2) und das zweite Mikrowellensignal (OL) empfangen, um jeweils zweite Niederfrequenzdemodulationssignale (X, Y) zu erzeugen, die gemäß trigonometrischen Funktionen (sin, cos) vom Phasenzustand ($\Theta=0$, $\pi$) des zweiten Datensignals (D21) in der dritten Mikrowelle (PP) und von einer durch die Funkübertragung eingeführten zufälligen Phasenverschiebung (P) abhängen, und

- Mittel zum Wiedergewinnen (14) des zweiten Datensignals (D21) ausgehend von den beiden Niederfrequenzdemodulationssignalen (X, Y).

5. Funksystem nach Anspruch 4, dadurch **gekennzeichnet**, daß die Mittel zum Wiedergewinnen (14) umfassen

- analoge Invertierglieder (147a, 147b) zum Erzeugen von zwei zweiten Niederfrequenzdemodulationssignalen (-X, -Y) gegenphasig in bezug auf die ersten Niederfrequenzdemodulationssignale (X, Y) und

- logische Mittel (146) zum dynamischen Auswählen des einen (S) der ersten und zweiten Niederfrequenzdemodulationssignale (X, -X, Y, -Y) abhängig von den Modulen ($|X|$, $|Y|$) und Vorzeichen (SIG $|X.Y|$) der ersten Demodulationssignale (X, Y), um das zweite Datensignal (D21) wiederzugewinnen.

6. Funksystem nach einem beliebigen der Ansprüche 1 bis 5 dadurch **gekennzeichnet**, daß die Datenendeinrichtungsstation (2) und die zweite Datenverarbeitungseinheit (U2) in eine kontaktfreie Zahlungskarte mit elektronischem Chip integriert sind.

## Claims

1. Radio system for alternately transmitting by microwaves first and second digital data signals (D12, D21) between first and second data processing units (U1, U2) connected to the radio system, said first data signal (D12) being transmitted from the first unit (U1) to the second unit (U2) during first data transmission periods, and said second data signal (D21) being transmitted from the second unit (U2) to the first unit (U1) during second data transmission periods,

said system comprising transmitting and receiving central (1) and terminal (2) stations,

said transmitting and receiving central station (1) being connected to the first processing unit for emitting a first microwave (PA) modulated in amplitude by said first data signal (D12) during said first transmission periods and a second unmodulated microwave (P) during said second transmission periods and,

said transmitting and receiving terminal station (2) being connected to the second processing unit and comprising one transmitting and receiving antenna (20) having first and second ports for emitting a third two-phase-state (O, $\pi$) microwave (PP) modulated by the second data signal (D21) during the second transmission periods,

and a microwave detecting and modulating circuit (22) connected to the first antenna port (20) by a transmission line (224) on the one hand for detecting the amplitude of the first microwave (PA) emitted by the central station (1) during said first transmission periods thereby recovering the first data signal (D12) and, on the other hand, for modulating the second microwave (P) received by the antenna (20) during said second transmission periods and retroreflected to said central station (1),

characterized in that the detecting and modulating circuit (22) comprises a field effect transistor (223) having first and second electrodes (223d and 223s) respectively connected to said transmission line (224) end and to a reference ground of said terminal station (2), and a third electrode (223g) to which are applied, during the first data transmission periods, a predetermined d.c. voltage (VP) controlling the operation of the transistor (223) in quadratic condition and, during the second data transmission periods, the second data signal (D21) controlling the operation of the transistor (223) in switching condition in order to two-phase-state modulate said second microwave into the third retroflected microwave to the central station (1), according to logic levels of the second data signal (D21).

2. Radio system according to claim 1, characterized in that the terminal station (2) comprises means (21) connected to the second port of the antenna (20) for producing a d.c.supply voltage (VA) by rectifying and filtering of the first and second received microwaves (PA, P), said d.c. supply voltage (VA) being supplied to circuits in the terminal station (2) and/or to the second data processing unit (U2).

3. Radio system according claim 1 or 2, characterized in that the central station (1) comprises

a two-dimensional emission antenna (12) with two square elements (12a and 12b) and having two first ports (121a, 121b) receiving first and second microwave signals corresponding to said first and second microwaves (PA, P) for emitting the first microwave (PA) to the terminal station (20) during the first data transmission periods, and for emitting said second microwave (PP) and for supplying the second microwave signal (OL) during the second data transmission periods,

a two-dimensional reception antenna (13) with two square elements (13a and 13b) for receiving the third microwave (PP) emitted by the terminal station (20) during the second data transmission periods, thereby delivering two phase-shifted microwave signals (A1, A2) corresponding to said third microwave, and

phase demodulating means (14a, 14b and 14) connected to the square elements (12a, 12b, 13a, 13b) of the transmission and reception antenna (12, 13) and receiving said two phase-shifted microwave signals (A1, A2) and said second microwave signal (OL) for phase demodulating said second data signal during said second transmission periods.

4. Radio system according to claim 3, characterized in that said phase demodulating means comprise

two microwave mixers (14a and 14b) receiving the phase-shifted microwave signals (A1, A2) and the second microwave signal (OL) for respectively deriving two first low-frequency demodulated signals (X, Y) depending, according to trigonometrical functions (sin, cos), on the phase state ($\theta$= O, $\pi$) of the second data signal (D21) in the third microwave (PP), and on a random phase shift ($\psi$) introduced by the radio transmission, and

means for recovering (14) the second data signal (21) from the two low-frequency demodulated signals (X, Y).

5. Radio system according to claim 4, characterized in that said recovering means (14) comprise

analog inverters (147a, 147b) for deriving two second low-frequency demodulated signals (-X, -Y) in phase opposite to the first low-frequency demodulated signals (X, Y), and

logic means (146) for dynamically selecting one (S) of the first and second low-frequency demodulated signals (X, -X, Y, -Y) as a function of the moduli ($|X|$, $|Y|$) and signs (SIG$|X.Y|$) of said first demodulated signals (X, Y) so as to recover the second data signal (D21).

6. Radio system according to any one of claims 1 to 5, characterized in that the terminal station (2) and the second data processing unit (U2) are integrated into a contact-free payment card including an electronic chip.

*FIG.1*

**STATION CENTRALE** 1

DETECTEUR DE PHASE 14

X
Y

OSCILLATEUR LOCAL MICRO-ONDE 10

OL,F= 2,45GHz

MODULATEUR D'AMPLITUDE 11

13 13a 13b 130a 130b 131b A2 131a A1 14a 14b OL2 122b OL1 122a 120a 120b 12a 121a 121b 12b 12

OLA,OL

D21 D12

UNITE DE TRAITEMENT DE DONNEES U1

(0)
PP
(π)

PA,P

**STATION TERMINALE** 2

20 SPP₂
SA₂,SP₂
220
22 DETECTION D'AMPLITUDE ET MODULATION DE PHASE 221
222

SAa₂,SPa₂

REDRESSEMENT ET FILTRAGE 21

23 230 231 VP SW

VA D12 D21

U2 UNITE DE TRAITEMENT DE DONNEES

VAa
B

EP 0 412 884 B1

FIG.2

**FIG.3**

DETECTION D'AMPLITUDE
ET MODULATION DE PHASE

**FIG.4**

**FIG.6**

FIG.5